(19) Europäisches Patentamt
European Patent Office
Office européen des brevets

(11) **EP 1 762 982 B1**

(12) **FASCICULE DE BREVET EUROPEEN**

(45) Date de publication et mention
de la délivrance du brevet:
**10.05.2017 Bulletin 2017/19**

(51) Int Cl.:
*G06T 11/00* (2006.01)   *A61B 5/00* (2006.01)
*G01N 21/64* (2006.01)

(21) Numéro de dépôt: **06354025.6**

(22) Date de dépôt: **28.08.2006**

(54) **Procédé de reconstuction de la distribution d'éléments fluorescents dans un milieu diffusant**

Verfahren der Rekonstruktion der Verteilung fluoreszierender Elemente in einem streuenden Medium

Method of reconstruction of the distribution of fluorescent elements in a scattering medium

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.08.2005 FR 0508836**

(43) Date de publication de la demande:
**14.03.2007 Bulletin 2007/11**

(73) Titulaire: **Commissariat à l'Énergie Atomique et aux Énergies Alternatives**
**75015 Paris (FR)**

(72) Inventeurs:
• **Da Silva, Anabela**
**38000 Grenoble (FR)**
• **Dinten, Jean-Marc**
**69008 Lyon (FR)**

(74) Mandataire: **Hecké, Gérard et al**
**Cabinet Hecké**
**10, rue d'Arménie - Europole**
**BP 1537**
**38025 Grenoble Cedex 1 (FR)**

(56) Documents cités:
• **LAM S ET AL: "Time domain fluorescent diffuse optical tomography: analytical expressions"** OPTICS EXPRESS OPT. SOC. AMERICA USA, vol. 13, no. 7, 4 avril 2005 (2005-04-04), XP002392050 ISSN: 1094-4087
• **FEDELE ET AL: "Fluorescence photon migration by the boundary element method"** JOURNAL OF COMPUTATIONAL PHYSICS, LONDON, GB, vol. 210, no. 1, 1 juin 2005 (2005-06-01), pages 109-132, XP005001655 Elsevier, www.sciencedirect.com ISSN: 0021-9991
• **JOSHI A ET AL: "adaptive finite element based tomography for fluorescence optical imaging in tissue"** OPTICS EXPRESS, OPTICAL SOCIETY OF AMERICA, WASHINGTON, DC,, US, vol. 12, no. 22, 1 novembre 2004 (2004-11-01), pages 1-16, XP002353720 ISSN: 1094-4087
• **DA SILVA A ET AL: "Evaluation of a segmentation-based reconstruction scheme for fluorescence-enhanced diffuse optical tomography"** PHOTON MIGRATION AND DIFFUSE-LIGHT IMAGING II, JUN. 12-16 2005, MUNICH, GERMANY; PROCEEDINGS OF THE SPIE, vol. 5859, 12 juin 2005 (2005-06-12), pages 1-10, XP008064640
• **EPPSTEIN M J ET AL: "A COMPARISON OF EXACT AND APPROXIMATE ADJOINT SENSITIVITIES IN FLUORESCENCE TOMOGRAPHY"** IEEE TRANSACTIONS ON MEDICAL IMAGING, IEEE SERVICE CENTER, PISCATAWAY, NJ, US, vol. 22, no. 10, octobre 2003 (2003-10), pages 1215-1223, XP001231838 ISSN: 0278-0062

EP 1 762 982 B1

**Description**

**Domaine technique de l'invention**

L'invention concerne un procédé de reconstruction de la distribution d'éléments fluorescents dans un milieu diffusant ayant sensiblement une forme cylindrique finie, comportant une étape de formulation de fonctions de transfert de l'énergie dans le milieu entre au moins une source de lumière d'excitation ponctuelle et au moins un détecteur.

**État de la technique**

En imagerie optique et en tomographie optique diffusive, l'objet examiné, ou au moins la zone examinée, présente souvent une forme cylindrique. Il peut s'agir d'un tube cylindrique dans lequel est disposée une souris, par exemple, ou une partie du corps humain.

La tomographie optique diffusive classique comporte la reconstruction de contrastes d'absorption et/ou de diffusion, tandis que la tomographie optique diffusive de fluorescence comporte la reconstruction de la concentration en fluorophores et/ou du temps de vie de molécules fluorescentes. Dans ce dernier cas, on cherche à déterminer la distribution de marqueurs fluorescents dans un milieu diffusant à partir de données de mesure.

On trouve classiquement deux approches pour le traitement des données de mesure. Dans une première approche, analytique, un cylindre infini est considéré afin de faire une approximation bidimensionnelle, ce qui ne permet pas d'obtenir de résultats satisfaisants dans le cas où le cylindre n'est pas infini. Dans une seconde approche, qui est numérique et tridimensionnelle, un cylindre de taille finie est considéré. Dans ce cas, on utilise par exemple la méthode des éléments finis, la méthode des différences finies ou la méthode des intégrales de frontières. Cependant, ces méthodes sont coûteuses en temps de calcul.Des exemples d'approche analytique sont données dans l'article "Time domain fluorescent diffuse optical tomography: analytical expressions", S. Lam et al., Optics Express, vol. 13, N°7, avril 2005. Dans l'article « The theoretical basis for the détermination of optical pathlengths in tissue : temporal and frequency analysis » de S.R. Arridge et al. (Phys. Med. Biol., 1992, Vol. 37, No 7, 1531-1560), la propagation de la lumière dans des tissus biologiques confinés dans un cylindre fini est donnée par analogie avec la conduction de la chaleur dans des solides, sans cependant tenir compte de la fluorescence. L'article de S.R.Arridge fait référence à l'ouvrage « Conduction of heat in solids » de H.S. Carslaw et al. (1986, Oxford at the Clarendon Press), qui décrit une solution de l'équation de conduction de la chaleur dans un cylindre fini par l'intermédiaire de fonctions de Green. L'expression est limitée aux points de la surface du cylindre.

**Objet de l'invention**

L'invention a pour but de remédier à ces inconvénients et, en particulier, de proposer un procédé de reconstruction de la distribution d'éléments fluorescents dans un milieu diffusant ayant sensiblement la forme d'un cylindre fini, ce procédé permettant d'utiliser une approche analytique et tridimensionnelle.
Selon l'invention, ce but est atteint par le fait que l'étape de formulation comporte la formulation d'une pluralité de premières fonctions de transfert d'énergie représentatives respectivement du transfert de l'énergie entre la source de lumière d'excitation ponctuelle et les éléments fluorescents et la formulation d'une pluralité de secondes fonctions de transfert d'énergie représentatives respectivement du transfert de l'énergie entre les éléments fluorescents et le détecteur.Ces premières et secondes fonctions de transfert sont des fonctions de Green résolvant l'équation de diffusion et correspondant à un volume cylindrique fini, les fonctions de Green étant exprimées en fonction des fonctions de Bessel modifiées.

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre la propagation de la lumière dans un milieu diffusant ayant sensiblement une forme cylindrique finie.
La figure 2 représente l'organigramme d'un mode de réalisation particulier du procédé selon l'invention.

**Description de modes particuliers de réalisation**

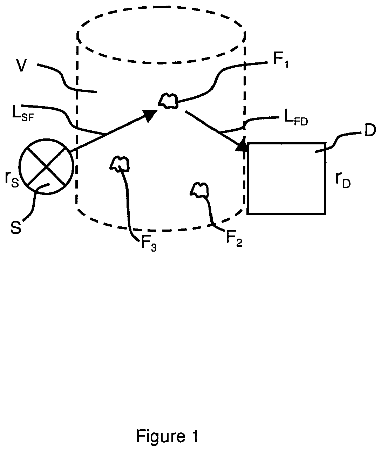

Sur la figure 1, une source S de lumière d'excitation ponctuelle est placée à un point $r_s$ et émet une lumière ayant une première longueur d'onde $\lambda_{SF}$ et une amplitude Q. La lumière émise se propage dans un volume V d'un milieu diffusant ayant sensiblement une forme cylindrique finie, dans lequel sont répartis des éléments fluorescents F selon une distribution que l'on cherche à déterminer. Sur la figure 1, une première onde diffusive $L_{SF}$ émise par la source S excite un élément fluorescent $F_1$ qui émet ensuite un rayonnement ayant une seconde longueur d'onde $\lambda_{FD}$: l'intensité de cette seconde onde diffusive $L_{FD}$ est mesurée par le détecteur D. La distribution des éléments fluorescents doit alors être déterminée à partir des mesures effectuées par le détecteur D. Ces mesures sont effectuées à partir d'un ensemble de positions de source. Dans le cas de plusieurs détecteurs, les mesures effectuées par tous les détecteurs seront prises en compte.

Sur la figure 1, deux autres éléments fluorescents $F_2$ et $F_3$ sont représentés. Les éléments fluorescents $F_1$, $F_2$ et $F_3$ étant répartis dans le volume V, le détecteur reçoit une densité de photons $\phi^M$ mesurée composée par toutes les secondes ondes $L_{FD}$ émises par l'ensemble des éléments fluorescents $F_1$, $F_2$ et $F_3$. Pour des raisons de clarté, les ondes correspondant aux éléments fluorescents $F_2$ et $F_3$ ne sont pas représentées.

On définit une première fonction de transfert d'énergie $G(\lambda_{SF}, \vec{r}_S, \vec{r}_F)$ représentative du transfert de l'énergie entre la source S de lumière d'excitation ponctuelle et les éléments fluorescents F, et une seconde fonction de transfert d'énergie $G(\lambda_{FD}, \vec{r}_F, \vec{r}_D)$ représentative du transfert de l'énergie entre les éléments fluorescents F et le détecteur D.

On peut montrer que la densité théorique de photons $\phi^M$ mesurée par le détecteur D peut être exprimée, de façon approximative, par une intégrale comportant le produit des première et seconde fonctions de transfert G :

$$\phi^M(\vec{r}_S, \vec{r}_D) = Q(r_S)\int_V G(\lambda_{SF}, \vec{r}_S, \vec{r}_F)\beta(\vec{r}_F)G(\lambda_{FD}, \vec{r}_F, \vec{r}_D)d\vec{r}_F \quad (1),$$

où le paramètre

$$\beta(\vec{r}_F) = \frac{\delta\mu(\vec{r}_F)\eta}{1 - i\omega\tau(\vec{r}_F)} \quad (2)$$

dépend du rendement quantique $\eta$ de l'élément fluorescent, de l'absorption locale $\delta\mu(\vec{r}_F)$ due aux éléments fluorescents et de l'amortissement $(1-i\omega\tau(\vec{r}_F))^{-1}$ lié au temps de vie $\tau$ des éléments fluorescents F et à la pulsation $\omega$ imposée extérieurement au rayonnement, la lumière étant émise de façon pulsée.

Les première et seconde fonctions de transfert G peuvent ainsi être traitées comme des fonctions de Green déterminées en résolvant des équations de diffusion pour le volume cylindrique V fini et pour une longueur d'onde $\lambda$ donnée :

$$\nabla^2 G(\lambda, \vec{r}, \vec{r}_O) + k_\lambda G(\lambda, \vec{r}, \vec{r}_O) = \delta(\vec{r} - \vec{r}_O) \quad (3),$$

$\delta$ étant la fonction de Dirac et $k_\lambda^2 = -\dfrac{\mu_\lambda}{D_\lambda} + \dfrac{i\omega}{c_n D_\lambda}$ le nombre d'onde. Dans ces expressions, $c_n$ est la vitesse de la lumière dans le milieu, $\mu_\lambda$, est le coefficient d'absorption du milieu, $D_\lambda$ est le coefficient de diffusion et $\vec{l}$ et $\vec{r}_O$ sont les variables spatiales de la fonction de Green. Les paramètres $\mu_\lambda$ et $D_\lambda$ sont évalués aux longueurs d'onde correspondantes $\lambda_{SF}$ et $\lambda_{FD}$. De plus, les solutions des équations de diffusion doivent satisfaire à des conditions aux limites sur la surface délimitant le volume cylindrique, par exemple les conditions de Dirichlet ou les conditions de Neumann. Le problème mathématique est ainsi analogue au problème de la conduction de la chaleur dans un milieu condensé présentant une forme cylindrique finie.

Pour un volume cylindrique fini, les fonctions de Green résolvant les équations de diffusion et satisfaisant aux conditions aux limites peuvent être exprimées en fonction des fonctions de Bessel modifiées :

$$G(\lambda,\vec{r},\vec{r}_O) = \frac{1}{D_\lambda \pi l} \sum_{p=1}^{+\infty} \sin\frac{p\pi z}{l} \sin\frac{p\pi z_O}{l} \sum_{n=-\infty}^{+\infty} \frac{I_n(rk_p)F_n(ak_p,r_Ok_p)}{I_n(ak_p)} \cos n(\theta-\theta_O) \quad \text{si } r \le r_O,$$

$$G(\lambda,\vec{r},\vec{r}_O) = \frac{1}{D_\lambda \pi l} \sum_{p=1}^{+\infty} \sin\frac{p\pi z}{l} \sin\frac{p\pi z_O}{l} \sum_{n=-\infty}^{+\infty} \frac{I_n(r_Ok_p)F_n(ak_p,rk_p)}{I_n(ak_p)} \cos n(\theta-\theta_O) \quad \text{si } r > r_O$$

$$(4).$$

Dans ces équations (4), *l* est la hauteur du cylindre, $\alpha$ est le rayon du cylindre, $\vec{r}=(r,\theta,z)$ et $r_O=(r_O,\theta_O,z_O)$ sont les variables spatiales de la fonction de Green en coordonnées cylindriques, $F_n(u,v)=I_n(u)K_n(v)-K_n(u)I_n(v)$, $I_n$ et $K_n$ sont les fonctions de Bessel modifiées respectivement de première et de deuxième espèce d'ordre *n*. De plus, on définit

$$k_p = \sqrt{k_\lambda{}^2 + p^2\pi^2/l^2} \, .$$

Les équations (4) sont ensuite introduites dans l'équation (1). Pour un calcul discret, l'espace du volume cylindrique V est divisé en N volumes élémentaires selon un maillage approprié. L'intégrale de l'équation (1) est alors remplacée par une somme sur les N volumes élémentaires $dv_j$ constituant le volume cylindrique V :

$$\phi^M(\vec{r}_S,\vec{r}_D) = Q(\vec{r}_S)\sum_{j=1}^{N} G(\lambda_{SF},\vec{r}_S,\vec{r}_j)\beta(\vec{r}_j)G(\lambda_{FD},\vec{r}_j,\vec{r}_D)dv_j \quad (5).$$

Selon l'invention, le procédé de reconstruction comporte la formulation d'une pluralité de N premières fonctions de transfert d'énergie $G(\lambda_{SF},\vec{r}_S,\vec{r}_j)$ représentatives respectivement du transfert de l'énergie entre la source S de lumière d'excitation ponctuelle et les éléments fluorescents F et la formulation d'une pluralité de N secondes fonctions de transfert d'énergie $G(\tau_{FD},\vec{r}_j,\vec{r}_D)$ représentatives respectivement du transfert de l'énergie entre les éléments fluorescents et le détecteur. Ainsi, on associe à chaque volume élémentaire $dv_j$ une première fonction de transfert d'énergie $G(\lambda_{SF},\vec{r}_S,\vec{r}_j)$ et une seconde fonction de transfert d'énergie $G(\lambda_{FD},\vec{r}_j,\vec{r}_D)$.

Lorsqu'on considère une pluralité de $N_S$ sources S de lumière d'excitation ponctuelle et une pluralité de $N_D$ détecteurs D, une représentation matricielle peut être choisie :

$$\left[\phi^M\right]_{N_D \times N_S} = \left[G_{FD}\right]_{N_D \times N}\left[\beta dv\right]_{N \times N}\left[G_{SF}\right]_{N \times N_S}\left[Q\right]_{N_S} \quad (6).$$

Dans cette équation, chaque colonne de $[\phi^M]_{N_D \times N_S}$ représente la mesure sur $N_D$ détecteurs pour une source S donnée.

Pour chaque source S et pour chaque détecteur D, une matrice de conversion *J* peut être calculée, ce qui permet de relier de manière linéaire la densité de photons $\phi^M$ mesurée au paramètre $\beta$:

$$\phi^M_{SD} = \sum_{j=1}^{N} J_{SDj}\beta_j \quad (7).$$

L'ensemble des combinaisons source-détecteur permet de construire l'équation matricielle qui est ensuite résolue dans un algorithme de reconstruction, soit en calculant l'erreur entre les mesures expérimentales et cette équation théorique matricielle (par exemple par l'intermédiaire de la méthode de rétroprojection d'erreurs ou d'algorithmes de type ART (Algebraic Reconstruction Technique)), soit en inversant directement la matrice *J* (par exemple par l'intermédiaire d'algorithmes de type SVD (Single Value Decomposition)).

Dans le cas du calcul d'erreur entre la mesure expérimentale et la théorie, on utilise une distribution théorique des éléments fluorescents qui est ajustée au fur et à mesure de manière à réduire cette erreur.

Dans le cas de l'inversion de la matrice, on obtient, dans une première étape, le paramètre $\beta$ qui dépend de la distribution des éléments fluorescents par l'intermédiaire de l'absorption locale $\delta\mu(\vec{r}_F)$ due aux éléments fluorescents et par l'intermédiaire de l'amortissement $(1-i\omega\tau(\vec{r}_F))^{-1}$ lié au temps de vie $\tau$ des éléments fluorescents F. La connaissance du paramètre $\beta$ permet ainsi de déterminer la distribution et la concentration locale des éléments fluorescents.

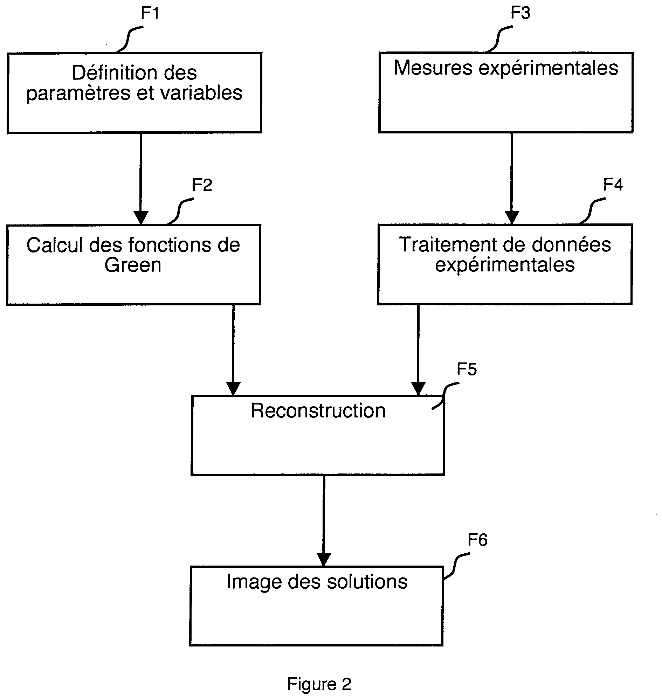

Comme représenté à la figure 2, les paramètres et les variables sont définies (fonction F1 sur la figure 2) en début du procédé de reconstruction. On définit ainsi la géométrie du cylindre (la hauteur $l$ et le rayon $a$), les positions des sources $(\vec{r}_S)$ et détecteurs $(\vec{r}_D)$, le maillage du milieu et les paramètres constitutifs du milieu comme les coefficients de diffusion $(D_\lambda)$ et d'absorption $(\mu_\lambda)$ et les longueurs d'ondes $(\lambda_{SF}, \lambda_{FD})$. Ensuite les fonctions de Green G sont déterminées (fonction F2 sur la figure 2) conformément aux équations (4). La matrice de conversion $J$ peut alors être déterminée.

D'autre part, la mesure expérimentale (fonction F3 sur la figure 2) et un traitement des données expérimentales (fonction F4 sur la figure 2) permettent de déterminer les densités de photons $\phi^M$ mesurées par les différents détecteurs D. Les paramètres liés aux éléments fluorescents F sont ensuite reconstruits (fonction F5 sur la figure 2). Un traitement supplémentaire (fonction F6 sur la figure 2) permet ensuite de représenter sous forme d'image la distribution des éléments fluorescents F ainsi que de leur concentration.

Le calcul des fonctions de Green conformément aux équations (4) peut être optimisé en temps de calcul en utilisant une représentation synthétique des fonctions de Green :

$$G = \sum_p a_p u_p \qquad (8)$$

où $a_p = \sin\dfrac{p\pi z}{l}\sin\dfrac{p\pi z_O}{l}$, $u_p = \displaystyle\sum_{n=-\infty}^{+\infty} g_{n,p}$ et $g_{n,p} = \dfrac{I_n(rk_p)F_n(ak_p,r_Ok_p)}{I_n(ak_p)}\cos n(\theta-\theta_O)$. Il est plus

judicieux de calculer d'abord, et une fois pour toutes, les fonctions $\alpha_p$ (ne dépendant que de $z$) et $u_p$ (ne dépendant que de $r$ et $\theta$) séparément, et d'effectuer ensuite leur produit scalaire. Le choix de l'ordre de troncature pour les indices $n$ et $p$ peut être effectué conformément au théorème de Shannon. Pour $n$, 100 est un ordre suffisant et pour $p$, 20 est un ordre suffisant.

## Revendications

**1.** Procédé de reconstruction de la distribution d'éléments fluorescents (F) dans un milieu diffusant (V) ayant sensiblement une forme cylindrique finie, comportant une étape de formulation de fonctions de transfert de l'énergie dans le milieu entre au moins une source (S) de lumière d'excitation ponctuelle et au moins un détecteur (D), **caractérisé en ce que** l'étape de formulation comporte la formulation d'une pluralité de premières fonctions ($G(\lambda_{SF},\vec{r}_S,\vec{r}_j)$) de transfert d'énergie représentatives respectivement du transfert de l'énergie entre la source (S) de lumière d'excitation ponctuelle et les éléments fluorescents (F) et la formulation d'une pluralité de secondes fonctions ($G(\lambda_{FD},\vec{r}_j,\vec{r}_D)$) de transfert d'énergie représentatives respectivement du transfert de l'énergie entre les éléments fluorescents (F) et le détecteur (D), lesdites premières et secondes fonctions de transfert (G) étant des fonctions de Green résolvant l'équation de diffusion et correspondant à un volume cylindrique fini, les premières et secondes fonctions de transfert (G) de Green étant exprimées en fonction des fonctions de Bessel modifiées ($F_n$, $I_n$, $K_n$).

## Patentansprüche

**1.** Verfahren zur Rekonstruktion der Verteilung von fluoreszierenden Elementen (F) in einem streuenden Medium (V) mit im Wesentlichen einer endlichen zylindrischen Form, umfassend einen Schritt zur Formulierung von Energieübertragungsfunktionen in dem Medium zwischen wenigstens einer Quelle (S) für punktuelles Anregungslicht und wenigstens einem Detektor (D), **dadurch gekennzeichnet, dass** der Formulierungsschritt die Formulierung einer Vielzahl von ersten Energieübertragungsfunktionen ($G(\lambda_{SF},\vec{r}_S,r_j)$), welche jeweils für die Energieübertragung zwischen der Quelle (S) für punktuelles Anregungslicht und den fluoreszierenden Elementen (F) repräsentativ sind, und die Formulierung einer Vielzahl von zweiten Energieübertragungsfunktionen ($G(\lambda_{FD},\vec{r}_j,\vec{r}_D)$), welche jeweils für die Energieübertragung zwischen den fluoreszierenden Elementen (F) und dem Detektor (D) repräsentativ sind, umfasst, wobei die ersten und zweiten Übertragungsfunktionen (G) Greensche Funktionen sind, die die Diffusionsgleichung lösen und einem endlichen zylindrischen Volumen entsprechen, wobei die ersten und zweiten Greenschen Übertragungsfunktionen (G) in Abhängigkeit von den modifizierten Bessel-Funktionen ($F_n$, $I_n$, $K_n$) ausgedrückt sind.

**Claims**

1. Method for reconstructing the distribution of fluorescent elements (F) in a diffusing medium (V) having substantially a finite cylindrical shape, comprising a step of formulating energy transfer functions in the medium between at least one punctual excitation light source (S) and at least one detector (D),
   **characterized in that** the formulation step comprises formulation of a plurality of first energy transfer functions ($G(\lambda_{SF}, \overline{r}_S, \overline{r}_F)$) respectively representative of an energy transfer between the punctual excitation light source (S) and the fluorescent elements (F) and formulation of a plurality of second energy transfer functions ($G(\lambda_{FD}, \overline{r}_F, \overline{r}_D)$) respectively representative of an energy transfer between the fluorescent elements (F) and the detector (D), the first transfer functions and the second transfer functions (G) being Green functions solving the diffusion equation and corresponding to a finite cylindrical volume, the first and second Green transfer functions being expressed as a function of modified Bessel functions ($F_n$, $I_n$, $K_n$).

Figure 1

F1

Définition des
paramètres et variables

F3

Mesures expérimentales

F2

Calcul des fonctions de
Green

F4

Traitement de données
expérimentales

F5

Reconstruction

F6

Image des solutions

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **S. LAM et al.** Time domain fluorescent diffuse optical tomography: analytical expressions. *Optics Express,* Avril 2005, vol. 13 (7

- **S.R. ARRIDGE et al.** The theoretical basis for the détermination of optical pathlengths in tissue : temporal and frequency analysis. *Phys. Med. Biol.,* 1992, vol. 37 (7), 1531-1560
- **H.S. CARSLAW et al.** Conduction of heat in solids. Oxford at the Clarendon Press, 1986